# EUROPÄISCHE PATENTANMELDUNG

(11) **EP 1 544 834 A2**
(43) Veröffentlichungstag der Anmeldung: **22.06.2005**
(21) Anmeldenummer: 04029952.1
(22) Anmeldetag: 17.12.2004
(51) Int. Cl.: G09F 9/00

(54) **Anzeigetafel und Verfahren zur Anzeige**

(30) Priorität: 17.12.2003 DE 10359531; 27.02.2004 DE 102004010158
(71) Anmelder: KJ GmbH Installationen, 01139 Dresden (DE)
(72) Erfinder: Hörig, Robert, 01309 Dresden (DE); Juppe, Maik, 01809 Heidenau (DE); Köhn, Uwe, 01665 Klipphausen OT Weistropp (DE)
(74) Vertreter: Adler, Peter, Dipl.-Ing.

(57) **Zusammenfassung**

Die Erfindung betrifft eine Anzeigetafel mit einem dynamischen Anzeigemittel, einem Stromversorgungsnetzteil, einer Steuereinheit mit einem Mikroprozessor, einem das Anzeigemittel und die Steuereinheit umgebenden Gehäuse und mit einer das Anzeigemittel sichtbar freigebenden Frontscheibe und ein Verfahren zur Informationsverarbeitung und dynamischen Anzeige von Informationen mit einer Anzeigetafel, welche ein Anzeigemittel und eine Steuereinheit mit einem Mikroprozessor zur Ansteuerung des Anzeigemittels aufweist. Der Erfindung liegt die Aufgabe zugrunde, die Funktionalität einer Anzeigetafel zu erweitern und ein Verfahren zur Informationsverarbeitung und dynamischen Anzeige von Informationen zu schaffen, das den Aufwand der Informationserfassung und -verarbeitung reduziert. Die Aufgabe wird anordnungsseitig dadurch gelöst, dass eine Videokamera (4) elektrisch mit der Steuereinheit (3) und/oder dem Stromversorgungsnetzteil verbunden ist. Verfahrensseitig wird die Aufgabe dadurch gelöst, dass Bildinformationen mit einer Videokamera (4) erfasst werden und zur Signalverarbeitung und Ansteuerung des Anzeigemittels (2) an die Steuereinheit (3) der Anzeigetafel weitergeleitet werden.

## Beschreibung

Die Erfindung betrifft eine Anzeigetafel mit einem dynamischen Anzeigemittel, einem Stromversorgungsnetzteil, einer Steuereinheit mit einem Mikroprozessor, einem das Anzeigemittel und die Steuereinheit umgebenden Gehäuse und mit einer das Anzeigemittel sichtbar freigebenden Frontscheibe.

Die Erfindung betrifft außerdem ein Verfahren zur Informationsverarbeitung und dynamischen Anzeige von Informationen mit einer Anzeigetafel, welche ein Anzeigemittel und eine Steuereinheit mit einem Mikroprozessor zur Ansteuerung des Anzeigemittels aufweist.

Anzeigetafeln der beschriebenen Art sind in Informations- und Leitsystemen im öffentlichen Personennah- und -fernverkehr, in Veranstaltungskomplexen, Bildungsstätten und Verwaltungseinrichtungen bekannt. Dabei dienen die Anzeigetafeln der alleinigen Funktion der Anzeige von Informationen. Häufig werden separat vom elektronischen System der Informationsanzeige zwecks Erweiterung der Kommunikation, zur Messwert- oder anderweitigen Datenerfassung wie auch zur Überwachung Bildaufzeichnungen durch Webcams oder TV-Aufzeichnungsgeräte vorgenommen, deren Bildsignale in Datenverarbeitungsprogrammen eines lokalen Computernetzwerkes bearbeitet und ausgewählte Daten dieser Aufzeichnungen u. a. auf die Anzeigetafeln übertragen werden.

Nachteilig an den geschilderten Systemen ist der hohe Installations- und Verdrahtungsaufwand für jeweils ein separates Anzeigesystem und eine Bildaufzeichnungsanlage eines Datenverarbeitungssystems, die jedoch örtlich parallel zueinander betrieben werden. Zudem sind die stationär installierten, hochempfindlichen Bildaufzeichnungsgeräte in Nachbarschaft von Anzeigetafeln häufig der zufälligen wie auch vandalistischen Zerstörung ausgesetzt.

In einer bekannten Kombination von Anzeigetechnik und der Datenerfassung von beweglichen Objekten sind Anzeigetafeln mit Induktionssensoren ausgestattet. Diese sind auf oder an den Anzeigetafeln befestigt und sind jedoch nur in der Lage, sehr eingeschränkte Sensorinformationen, nämlich beispielsweise nur Lageveränderungen eines Objektes, zu erfassen.

Der Erfindung liegt somit die Aufgabe zugrunde, die Funktionalität einer Anzeigetafel zu erweitern und ein Verfahren zur Informationsverarbeitung und dynamischen Anzeige von Informationen zu schaffen, das den Aufwand der Informationserfassung und -verarbeitung reduziert.

Die Aufgabe wird anordnungsseitig dadurch gelöst, dass eine Videokamera elektrisch mit der Steuereinheit und/oder dem Stromversorgungsnetzteil verbunden ist.

Mit der Videokamera können Informationen aus direkter oder näherer Umgebung der Anzeigetafel erfasst werden und einerseits unter Nutzung der integrierten Steuereinheit der Anzeigetafel direkt zur Ausgabe auf der Anzeigetafel verarbeitet werden. Damit erreicht die herkömmliche Anzeigetafel eine neue Qualitätsstufe, nämlich die eines intelligenten, interaktiven Informationssystems. Zum anderen bietet die direkte elektrische Verbindung zum Netzteil dauerhafte Betriebssicherheit der Videokamera auch bei einem möglichen, kurzzeitigen Ausfall der Steuereinheit. Mittels eines integrierten Datenspeichers der Videokamera können auch unabhängig von der Steuereinheit Bildinformationen erfasst und gespeichert werden.

In einer vorteilhaften Ausgestaltung der Erfindung, weist die Steuereinheit und/oder die Videokamera (4) eine LAN-Verbindung zu einem lokalen Netzwerk (LAN = Local Area Network = lokales Netzwerk) auf. Eine LAN-Verbindung der Anzeigetafel zu einem lokalen Netzwerk (LAN) wird bereits in herkömmlicher Weise genutzt für die Datenübertragung von Daten verschiedener, im LAN befindlicher Computer, welche in Datenverarbeitungssystemen diese Daten zur Ausgabe auf der Anzeigetafel aufbereiten. Diese Datenverarbeitungssysteme sind beispielsweise Zeitmesssysteme von Sportstätten, die die Messsignale peripherer Zeiterfassungseinheiten auswerten oder auch Videoüberwachungssysteme von Parkeinrichtungen, die die Bildsignale peripher angeschlossener Bildaufzeichnungsanlagen verarbeiten, wobei jeweils diese Daten u. a. für die Ausgabe im Anzeigesystem verschiedener Anzeigetafeln aufbereitet und über die LAN-Verbindungen zu den Anzeigetafeln übertragen werden.

In erfindungsgemäßer Weise wird die LAN-Verbindung der Anzeigetafel dazu genutzt, den Datenaustausch des lokalen Netzwerkes mit der Anzeigetafel effizienter zu gestalten. Dabei ist entweder das über die Steuereinheit der Anzeigetafel erfasste Bildsignal der Videokamera oder das Bildsignal direkt von der Videokamera über eine LAN- Verbindung zu dem zentralen LAN-Server des LAN übertragbar und anschließend in den jeweiligen angeschlossenen Computern des lokalen Netzwerkes verarbeitbar. Günstig ist darüber hinaus eine Kopplung der Datenübertragung einerseits der Steuereinheit und andererseits der Videokamera über einen gemeinsamen Umsetzer (Switch) zu nur einer gemeinsamen LAN-Verbindung. Gleichzeitig wird mit der Nutzung einer vorhandenen LAN-Verbindung der Anzeigetafel zum zentralen LAN-Server der Installations- und Verdrahtungsaufwand für Datenverarbeitungssysteme mit peripherer Bilderfassung und -übertragung erheblich minimiert. Die LAN-Verbindungen können beispielsweise als Kupferleiter (Cu), Glasfaser-Lichtwellenleiter (LWL), oder als drahtlose, wireless LAN-Verbindung (WLAN) erstellt sein, die mit verschiedenen Datenprotokollen arbeiten können wie z.B. dem Telefonprotokoll (TDL-ISDN) -oder dem Internetprotokoll (TCP-IP) oder unter Nutzung von beidem.

In einer vorzugsweisen Ausbildung der Erfindung besteht das Anzeigemittel aus einer Flüssigkristallanzeige (LCD) oder einer Leuchtdiodenanzeige (LED) oder einer mechanischen Fallblattanzeige oder einem TFT-Monitor. Diese dynamischen Anzeigemittel eignen sich besonders für die hochwertige Anzeige digital übertragener und zeitlich schnell wechselnder Informationen, so auch für Informationen aus digital verarbeiteten Bildsignalen. Je nach den jeweiligen Einsatzbedingungen der Anzeigetafeln, die sehr unterschiedlich sein können, zum Beispiel an stark sonnenbestrahlten Standorten oder im Tunnel, haben die benannten Anzeigemittel ihre spezifischen Anwendungsvorteile. So erzeugen die TFT-Monitore vorzugsweise in abgedunkelten Bereichen, wie im Tunnel oder Unterführungen eine brillante Wiedergabe, wogegen bei taghellen Standorten die LED-Anzeige oder die Fallblattanzeige in der Anzeigezuverlässigkeit- und Qualität übertreffen.

Eine günstige Ausgestaltung besteht darin, dass die Videokamera physisch mit der Anzeigetafel verbunden ist. Hierbei wird weiterer Verdrahtungsaufwand zur Verdrahtung der Videokamera mit der Steuereinheit der Anzeigetafel sowie der Aufwand für die explizite Halterung der Videokamera verringert.

Darüber hinaus ist es besonders vorteilhaft, wenn die Videokamera innerhalb des Gehäuses und auf der dem Gehäuseinneren zugewandten Seite der Frontscheibe angeordnet ist, wobei ein Objektiv der Videokamera durch die Frontscheibe hindurch gerichtet ist. Die Bildaufzeichnung der Videokamera erfolgt somit durch die transparente Frontscheibe der Anzeigetafel hindurch, wobei die Videokamera, angeordnet in dem meist luftdicht ausgeführten Gehäuse der Anzeigetafel, vor Verschmutzung wie auch vor mechanischer Beschädigung, insbesondere vor vandalistischer Zerstörung, geschützt ist. Betriebsausfälle der Videokamera werden somit weitestgehend vermieden.

Ergänzend zur erfindungsgemäßen Anordnung der Videokamera ist es günstig, dass die Frontscheibe einen undurchsichtigen umlaufenden Randbereich mit einer durchsichtigen Unterbrechung aufweist, der das Objektiv der Videokamera zugeordnet ist. Ist diese durchsichtige Unterbrechung des umlaufenden Randbereiches in etwa auf die Größe und die Form des Objektivs der Videokamera abgestimmt, wird das Vorhandensein einer Videokamera im Gehäuse der Anzeigetafel optisch kaschierbar. U. a. wird damit der Schutzgrad der Einhausung der Videokamera in der Anzeigtafel erhöht.

Eine weitere Verbesserung dieses Schutzgrades ergibt sich, wenn die Frontscheibe aus Sicherheitsglas besteht.

Verfahrensseitig wird die Aufgabe dadurch gelöst, dass Bildinformationen mit einer Videokamera erfasst werden und zur Signalverarbeitung und Ansteuerung des Anzeigemittels an die Steuereinheit der Anzeigetafel weitergeleitet werden. Die anordnungsseitigen Vorteile, dass Bildinformationen aus direkter oder näherer Umgebung der Anzeigetafel erfasst werden können und unter Nutzung der integrierten Steuereinheit der Anzeigetafel direkt zur Ausgabe auf der Anzeigetafel verarbeitet werden können, spiegeln sich auch verfahrensseitig wider. Die herkömmliche, einseitig gerichtete Informationsausgabe erweitert sich zu einem lokalen, dialogfähigen Informationsverfahren.

Besonders vorteilhaft ist das erfindungsgemäße Verfahren, wenn die in der Steuereinheit der Anzeigetafel eingehenden Bildsignale mittels einer LAN-Verbindung zu einem lokalen Netzwerk (LAN) weitergeleitet und in einem zentralen LAN-Server verarbeitet werden. Auch verfahrensseitig führt die erweiterte Nutzung der LAN-Verbindung der Anzeigetafel zum Datenaustausch mit einem lokalen Netzwerk zu höherer Effizienz. Ist die Anzeigetafel in einem LAN eingebunden, wird das über die Steuereinheit der Anzeigetafel erfasste Bildsignal direkt über die vorhandene LAN-Verbindung der Steuereinheit der Anzeigetafel zu dem zentralen LAN-Server eines LAN übertragen und anschließend in den jeweiligen angeschlossenen Computern des lokalen Netzwerkes verarbeitet. Damit eröffnen sich umfangreiche Möglichkeiten der Weiterverwertung der in der Anzeigetafel erfassten Bildsignale in den verschiedensten Anwendungsprogrammen des lokalen Netzwerkes. Die Bereiche in der Nähe von Anzeigetafeln sind meist verkehrstechnische und öffentliche Brennpunkte. Mit diesem Verfahren können z.B. Videoüberwachungen dieser Bereiche mit den verschiedensten Auswertungsmöglichkeiten vorgenommen werden. Das erfindungsgemäße Verfahren führt des Weiteren zu einer räumlichen Konzentration des Datenaustausches und somit zur Minimierung des Installations- und Verdrahtungsaufwand für separate Bilderfassungs- und -übertragungssysteme.

Weitergehend führt das erfinderische Verfahren zu besonders praktischen Nutzen, wenn die Bildsignale zur Ansteuerung von einem am lokalen Netzwerk (LAN) angeschlossenen optischen und/oder akustischen Leit- und Informationssystem weitergeleitet und/oder als Eingangssignale eines biometrischen Überwachungssystems dienen. Damit kann mit dem erfinderischen Verfahren die empfangenen Bildsignale der Anzeigetafel ergänzend für Verkehrsregelungssysteme, für Fahrzeug- und Personenleitsysteme, für statistische Verkehrsaufkommensuntersuchungen, für Sicherheits- und Kontrollsysteme u. ä. verwendet werden.

In einer speziellen Ausgestaltung ist es vorgesehen, dass eine Verkehrszustandsüberwachung derart erfolgt, dass Bildsignale von neben oder unterhalb der Anzeigetafel fahrenden oder stehenden Fahrzeugen erfasst und verarbeitet werden. Hierbei finden die Bildsignale beispielsweise als ergänzende Informationen für zentrale Systeme im lokalen oder in miteinander verknüpften Netzwerken zur globalen Verkehrszustandsüberwachung Verwendung. Sind diese Anzeigetafeln beispielsweise im städtischen Nahverkehr öffentlicher Verkehrseinrichtungen eingesetzt, sind mit der Bilderfassung durch die Anzeigetafeln zum Beispiel Fahrzeuge identifizierbar und deren reale Ankunftszeiten und Abfahrtszeiten erfassbar. Ein im lokalen Netzwerk eingerichtetes Verkehrsleitsystem kann aufgrund dieser Daten z.B. bei eintretender Fahrplanabweichung zu Vergleichsdaten in einem Fahrplanrechner des Netzwerkes mit entsprechenden Informationen und Korrektiven, gegebenenfalls auch über die Anzeigetafel selbst, gezielt reagieren. Zur Erkennung weitreichender Verkehrsstörungen, z.B. Stau oder Unfall können die Bildsignale beispielsweise an ein mit dem lokalen Netzwerk verknüpftes globales Netzwerk zur allgemeinen Verkehrssicherung im Ballungsraum übermittelt werden. Die Bilderfassung über die Anzeigetafeln eröffnet somit weit reichende Informationsmöglichkeiten über den fließenden und stehenden Verkehr in der Straßenverkehrsüberwachung.

Eine weitere Ausgestaltung sieht vor, dass die Bildsignale von einfahrenden oder ausfahrenden Zügen derart verarbeitet werden, dass eine zugehörige Anzeige und/oder Ansage ausgelöst wird. Mit der Anwendung des erfindungsgemäßen Verfahrens im Bahnverkehr wird es beispielsweise möglich, mittels der an Bahnsteigen positionierten Anzeigetafeln geeignete Bilderfassungsdaten für ein Zughalterkennungssystem bereit zustellen oder bekannte Zughalterkennungssysteme mit den Daten zu ergänzen und somit in direktem Bezug zur realen Einfahrt eines Zuges eine Anzeige - nicht nur auf der erfindungsgemäßen Anzeigetafel-, oder eine Ansage auszulösen. Analog ist es ebenso möglich, mittels der Bilderfassung einer realen Ausfahrt eines Zuges eine Anzeige zu ändern oder zu löschen und/oder eine entsprechende Ansage auszulösen. Infolge der hiermit erzielten höheren Authentizität der Informationsquellen wird die Qualität des Informationsservices im Bahnverkehr weiter verbessert.

In einer weiteren vorteilhaften Ausgestaltung erfolgt eine Überwachung der Umgebung um die Anzeigetafel derart, dass Bildsignale von sich bewegenden oder stehenden Personen oder Gegenständen erfasst und verarbeitet werden. Die Bereiche in der Nähe der Anzeigetafeln sind oft auch sicherheitsrelevante Bereiche, wie z.B. Bahnsteige von Bahnhöfen. Mit dem erfindungsgemäßen Verfahren können Videoüberwachungen dieser Bereiche vorgenommen werden, bei denen die von der Anzeigetafel erfassten Bilddaten in spezielle Überwachungsprogramme des lokalen Netzwerkes eingegeben werden, die wiederum z.B. durch biometrische Messverfahren bestimmte Personen erkennen können oder durch andere Kontrollverfahren gefährlich erscheinende Gegenstände, wie beispielsweise Koffer mit vermuteten explosiven Inhalt, ausfindig machen und alarmieren können. Damit bietet das erfindungsgemäße Verfahren einen Beitrag zur Erhöhung der Sicherheit beim Personenschutz in öffentlichen Bereichen.

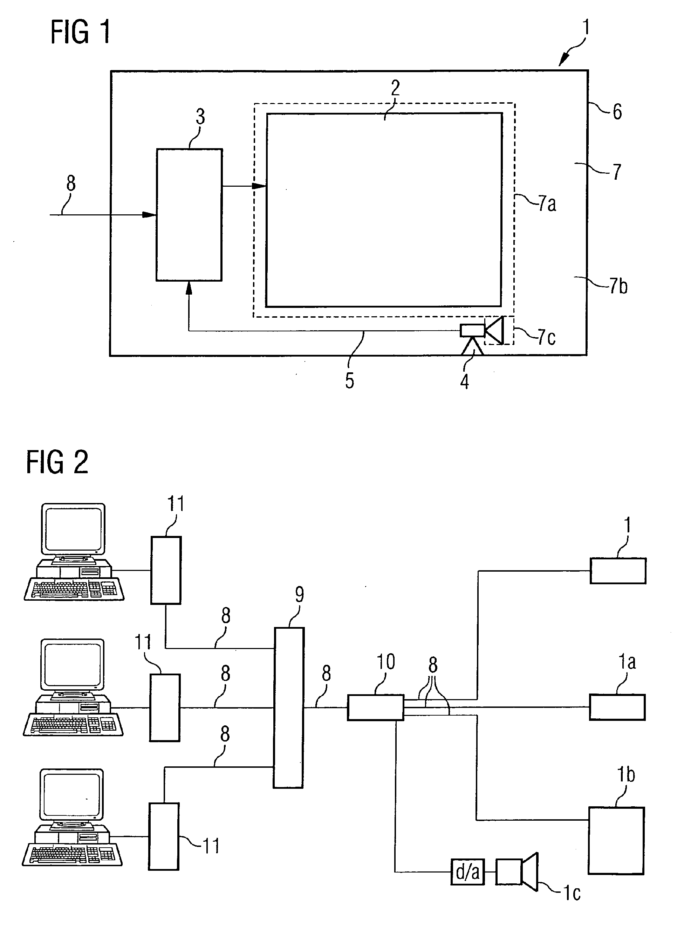

In einem Ausführungsbeispiel soll die Erfindung näher erläutert werden. Die zugehörigen Zeichnungen zeigen in einer schematischen Darstellung in
- Fig. 1: die erfinderische Anzeigetafel mit einer integrierten Videokamera und
- Fig. 2: diese Anzeigetafel mit einem lokalen Netzwerk verknüpft.

Die erfindungsgemäße Anzeigetafel 1 besteht im Wesentlichen aus einem Anzeigemittel 2, aus einer das Anzeigemittel 2 ansteuernde Steuereinheit 3, die durch einen Industrie-PC realisiert wird, einer Videokamera 4, die mit der Steuereinheit 3 elektrisch verbunden 5 ist, sowie aus einem abgedichteten Gehäuse 6 aus beispielsweise Stahlblech, in dem die genannten Bestandteile vor Schmutz, Feuchtigkeit und mechanischen Einwirkungen geschützt abgeschlossen sind. Das Gehäuse 6 verfügt über eine Frontscheibe 7, die im Bereich eines durchsichtigen Anzeigefeldes 7a den Blick auf das Anzeigemittel 2 freigibt. Vorzugsweise besteht die Frontscheibe 7 aus bruchsicherem Sicherheitsglas. Als Anzeigemittel 2 kann daher beispielsweise ein empfindliches Leuchtdiodenfeld (LED) unbedenklich verwendet werden. Mittels eines undurchsichtigen, umlaufenden Randbereiches 7b der Frontscheibe 7, beispielsweise erstellt durch eine partielle, rückseitige Farbbeschichtung, sind die integrierten Bestandteile der Anzeigetafel 1 sichtgeschützt verdeckt. Anzeigefeld 7a und Randbereich 7b der Frontscheibe 7 bildet hierbei eine gestalterisch vorteilhafte, homogene Ebene. In diesen umlaufenden undurchsichtigen Randbereich 7b ist eine Aussparung der Farbbeschichtung als durchsichtige Unterbrechung 7c des umlaufenden Randbereiches 7b eingearbeitet. Diese Aussparung der Farbbeschichtung ist in der Form und Größe der Objektivöffnung der Videokamera 4 angepasst, wobei die Videokamera 4 so innerhalb der Anzeigetafel 1 befestigt ist, dass das Objektiv der Videokamera 4 durch diese Unterbrechung des Randbereiches 7c der Frontscheibe 7 hindurch gerichtet ist. In dieser Weise ist das Vorhandensein einer Videokamera 4 in der Anzeigetafel 1 weitestgehend optisch kaschiert. Die mit der Videokamera 4 erfassten Bildsignale werden beispielsweise bereits in der Videokamera 4 digitalisiert und als Daten über die elektrische Verbindung 5 zur Steuereinheit 3 übertragen oder als analoge Bildsignale zur Steuereinheit 3 übertragen und dort digitalisiert. In der Steuereinheit 3 werden diese Daten derart verarbeitet, dass in Abhängigkeit bestimmter Bildsignale entsprechend zugeordnete Anzeigen mittels des Anzeigemittels 2 ausgelöst werden. Über eine LAN-Verbindung 8, welche einen Datenbus zu einem zentralen LAN-Server 9 realisiert, können für die Informationsverarbeitung zusätzlich die Ressourcen eines lokalen Netzwerkes (LAN) genutzt werden. Neben der erfinderischen Anzeigetafel 1 können weitere digitale oder analoge Ausgabekomponenten eines oder mehrere Leit- und Informationssysteme, wie zum Beispiel TFT-Monitore 11a, Fallblattanzeiger 11b oder Lautsprecher 11c, sternförmig mit dem lokalen Netzwerk verbunden sein, wobei für die digitalen Ausgabekomponenten 1a, 1b mit integriertem Controller ebenfalls LAN-Verbindungen 8 möglich sind. Für den elektrischen Anschluss der analogen Lautsprecher-Ausgabekomponente 1c ist lediglich ein Digital-Analogwandler erforderlich. In einem Umsetzer/Switch 10 werden die Daten des lokalen Netzwerkes entsprechend ihrer Adressen auf die jeweilige angeschlossene Ausgabekomponente 1, 1a, 1b, 1c verteilt und bei vorhandenen LAN-Verknüpfungen auch umgekehrt Daten der digitalen Ausgabekomponenten 1, 1a, 1b dem LAN adressiert zugeordnet. Der LAN besteht aus stern- oder kreisförmig über Datenbus mit dem zentralen LAN-Server 9 verbundener PC's oder Worksstationen 11. Somit können die Daten der erfinderischen Anzeigetafel 1 dem LAN zur Verfügung gestellt werden und die vorhanden Systemressourcen der angeschlossenen Computer, insbesondere der PC's 11, genutzt werden, um die Daten beispielsweise in speziellen Auswerte- und Überwachungsprogrammen zu verarbeiten und zur Ausgabe auf interne Worksstationen 11 oder auf die verschiedenen Ausgabekomponenten 1, 1a, 1b, 1c aufzubereiten. Eine in dieser Weise eingesetzte erfinderische Anzeigetafel 1 im Bahnverkehr kann beispielsweise ein einfahrenden Zug mit der Videokamera 4 visuell erfassen, die in der Steuereinheit 3 digitalisierten Daten der Bildsignale dem LAN zuführen, welcher diese Daten in einer vorhandenen Auswerteeinheit und einem vorhandenen Fahrplanrechner bearbeitet und aufbereitet. Über eine am LAN angeschlossene Ausgabekomponenten, wie zum Beispiel eine Informationstafel mit Fallblatt-Anzeiger 1b, können die aufbereiteten Daten quasi zeitgleich zur realen Ankunftszeit des Zuges eine entsprechende Anzeige über die tatsächliche Ankunft möglicherweise ergänzt durch weitere Informationen, wie zum Beispiel durch die Anzeige der planmäßigen Ankunfts- und Abfahrtszeit, auslösen. Darüber hinaus sind weitere Ausgabekomponenten ansteuerbar, wie zum Beispiel eine automatische Ansage über einen Lautsprecher 1c oder eine entsprechende Anzeige auf der erfindungsgemäßen Anzeigetafel 1 selbst.

### Bezugszeichenliste

- 1: erfindungsgemäße Anzeigetafel, Ausgabekomponente
- 1a: Ausgabekomponente eines optischen Leit- und Informationssystems, TFT-Monitor
- 1b: Ausgabekomponente eines optischen Leit- und Informationssystems, Fallblattanzeiger
- 1c: Ausgabekomponente eines akustisches Leit- und Informationssystems, Lautsprecher
- 2: dynamisches Anzeigemittel z.B. LCD/ LED-Anzeige
- 3: Steuereinheit z.B. Industrie-PC
- 4: Videokamera
- 5: elektrische Verbindung der Videokamera
- 6: Gehäuse
- 7: Frontscheibe
- 7a: durchsichtiges Anzeigefeld
- 7b: undurchsichtiger Randbereich der Frontscheibe
- 7c: Unterbrechung des undurchsichtigen Randbereiches
- 8: LAN-Verbindung
- 9: zentraler LAN-Server
- 10: Switch/Umsetzer
- 11: PC oder Workstation, z.B. Überwachungssystem, Mess- und Auswerteeinheiten, Fahrplanrechner

## Patentansprüche

1. Anzeigetafel mit einem dynamischen Anzeigemittel, einem Stromversorgungsnetzteil, einer Steuereinheit mit einem Mikroprozessor, einem das Anzeigemittel und die Steuereinheit umgebenden Gehäuse und mit einer das Anzeigemittel sichtbar freigebenden Frontscheibe, **dadurch gekennzeichnet, dass** eine Videokamera (4) elektrisch mit der Steuereinheit (3) und/oder dem Stromversorgungsnetzteil verbunden ist.

2. Anzeigetafel nach Anspruch 1, **dadurch gekennzeichnet, dass** die Steuereinheit (3) und/oder die Videokamera (4) eine LAN-Verbindung (8) zu einem lokalen Netzwerk (LAN) aufweist.

3. Anzeigetafel nach Anspruch 1 oder 2, **dadurch gekennzeichnet, dass** das Anzeigemittel (2) aus einer Flüssigkristallanzeige (LCD) oder einer Leuchtdiodenanzeige (LED) oder einer mechanischen Fallblattanzeige oder einem TFT-Monitor besteht.

4. Anzeigetafel nach einem der Ansprüche 1 bis 3, **dadurch gekennzeichnet, dass** die Videokamera (4) physisch mit der Anzeigetafel (1) verbunden ist.

5. Anzeigetafel nach Anspruch 4, **dadurch gekennzeichnet, dass** die Videokamera (4) innerhalb des Gehäuses (6) und auf der dem Gehäuseinneren zugewandten Seite der Frontscheibe (7) angeordnet ist, wobei ein Objektiv der Videokamera (4) durch die Frontscheibe (7) hindurch gerichtet ist.

6. Anzeigetafel nach Anspruch 5, **dadurch gekennzeichnet, dass** die Frontscheibe (7) einen undurchsichtigen umlaufenden Randbereich (7b) mit einer durchsichtigen Unterbrechung (7c) aufweist, der das Objektiv der Videokamera (4) zugeordnet ist.

7. Anzeigetafel nach einem der Ansprüche 1 bis 6, **dadurch gekennzeichnet, dass** die Frontscheibe (7) aus Sicherheitsglas besteht.

8. Verfahren zur Informationsverarbeitung und dynamischen Anzeige von Informationen mit einer Anzeigetafel, welche ein Anzeigemittel und eine Steuereinheit mit einem Mikroprozessor zur Ansteuerung des Anzeigemittels aufweist, **dadurch gekennzeichnet, dass** Bildinformationen mit einer Videokamera (4) erfasst werden und zur Signalverarbeitung und Ansteuerung des Anzeigemittels (2) an die Steuereinheit (3) der Anzeigetafel (1) weitergeleitet werden.

9. Verfahren nach Anspruch 8, **dadurch gekennzeichnet, dass** die in der Steuereinheit (3) der Anzeigetafel (1) eingehenden Bildsignale mittels einer LAN-Verbindung (8) zu einem zentralen LAN-Server (9) weitergeleitet und in einem lokalen Netzwerk (LAN) verarbeitet werden.

10. Verfahren nach Anspruch 9, **dadurch gekennzeichnet, dass** die Bildsignale zur Ansteuerung von einem am lokalen Netzwerk (LAN) angeschlossenen optischen und/oder akustischen Leit- und Informationssystem weitergeleitet und/oder als Eingangssignale eines biometrischen Überwachungssystems dienen.

11. Verfahren nach einem der Ansprüche 8 bis 10, **dadurch gekennzeichnet, dass** eine Verkehrszustandsüberwachung derart erfolgt, dass Bildsignale von neben oder unterhalb der Anzeigetafel (1) fahrenden oder stehenden Fahrzeugen erfasst und verarbeitet werden.

12. Verfahren nach einem der Ansprüche 8 bis 11, **dadurch gekennzeichnet, dass** die Bildsignale von einfahrenden oder ausfahrenden Zügen derart verarbeitet werden, dass eine zugehörige Anzeige und/oder Ansage ausgelöst wird.

13. Verfahren nach einem der Ansprüche 8 bis 12, **dadurch gekennzeichnet, dass** eine Überwachung der Umgebung um die Anzeigetafel (1) derart erfolgt, dass Bildsignale von sich bewegenden oder stehenden Personen oder Gegenständen erfasst und verarbeitet werden.
